# FASCICULE DE BREVET EUROPEEN

(11) **EP 2 102 470 B1**
(45) Date de publication et mention de la délivrance du brevet: **17.12.2014**
(21) Numéro de dépôt: 08701596.2
(22) Date de dépôt: 18.01.2008
(51) Int. Cl.: F02B 77/08, G01L 23/08

(54) **ENSEMBLE D'UN MOTEUR, NOTAMMENT DE MOTEUR DIESEL, ET D'UN DISPOSITIF DE DEMARRAGE DE MOTEUR**
ANORDNUNG EINES MOTORS, INSBESONDERE EINES DIESELMOTORS, UND EINER MOTORSTARTVORRICHTUNG
ASSEMBLY COMPRISING AN ENGINE, MAINLY A DIESEL ENGINE, AND AN ENGINE STARTING DEVICE

(30) Priorité: 19.01.2007 FR 0700387
(43) Date de publication de la demande: 23.09.2009
(73) Titulaire: Valeo Systèmes Thermiques, 78321 Le Mesnil-Saint-Denis Cedex (FR)
(72) Inventeur: SEGA, Patrick, F-78600 Maison-Laffite (FR)
(74) Mandataire: Rolland, Jean-Christophe
(86) Numéro de dépôt international: PCT/EP2008/050592
(87) Numéro de publication internationale: WO 2008/090100

(56) Documents cités:
- EP-A- 1 688 601
- GB-A- 1 249 881
- GB-A- 2 249 130
- US-A- 5 714 680

## Description

L'invention concerne un ensemble d'un moteur, notamment de moteur diesel, et d'un dispositif de démarrage de moteur (voir par exemple EP-A-1688601).

Elle est notamment destinée au domaine des véhicules automobiles.

Dans un moteur diesel, un piston mobile dans un cylindre, fermé par une culasse, fait varier le volume d'une chambre de combustion pour permettre de comprimer un mélange de carburant et de comburant destiné à s'auto enflammer.

Afin d'optimiser le fonctionnement du moteur, l'on cherche à maîtriser au mieux la combustion, notamment en contrôlant le taux de compression des gaz présents dans les chambres de combustion.

Pour cela, on peut utiliser un capteur permettant de mesurer la pression dans les chambres, de la convertir en un signal électrique et de transmettre un tel signal à un calculateur destiné à l'exploiter.

Pour disposer d'une lecture de pression dans la chambre quelle que soit la position du piston, il faut prévoir le capteur soit au niveau du piston soit au niveau de la culasse.

Positionner le capteur au niveau du piston ne paraît pas possible compte tenu des conditions de fonctionnement de celui-ci, notamment des variations de température qu'il subit. Il faudrait en outre mettre en oeuvre une solution permettant de faire passer l'information relevée par le capteur au calculateur. Comme le calculateur est fixe, car lié au châssis du véhicule, et le piston serait alors mobile, car lié au piston, ceci induirait une difficulté complémentaire.

Positionner le capteur au niveau de la culasse paraît également impossible en raison de la faible place disponible. En effet, la partie de la culasse fermant la chambre de combustion, appelée tête de cylindre, doit accueillir :
- des orifices de conduits d'alimentation en air et de conduits d'évacuation des gaz brûlés,
- des soupapes d'ouverture/fermetures desdits conduits,
- un logement pour une bougie de préchauffage, permettant le démarrage du moteur,
- un logement pour un injecteur, pour les moteurs à injection directe.

En outre, dans les moteurs diesel, les têtes de cylindre sont plates et leur surface se trouvent ainsi diminuée par rapport à la surface des têtes de cylindre de moteur essence qui sont réalisés en creux dans la culasse.

Compte tenu de ce manque de place, les seules tentatives proposer à ce jour pour relever la pression dans une chambre de combustion d'un moteur diesel consiste ainsi à intégrer un capteur de pression à une bougie de préchauffage.

Il s'agit toutefois d'organes complexes car ils doivent permettre d'assurer à la fois ces deux fonctions de mesure de pression et de préchauffage, qui sont sans aucun lien l'une avec l'autre.

Le but de l'invention est de pallier les inconvénients précités.

Elle repose sur la constatation que l'utilisation d'une bougie de préchauffage n'est pas forcément nécessaire pour le fonctionnement d'un moteur diesel, comme cela ressort de la demande de brevet français FR 05/07.638 non publiée au jour du dépôt de la présente demande.

Selon l'invention, il est ainsi proposé un ensemble selon la revendication 1.

Par «organe permettant de mesurer la pression», on entend un organe permettant de transformer une pression en un signal, par exemple électrique, destiné à être exploiter par à un dispositif de traitement de signal, notamment une unité de contrôle moteur.

Par «constitué d'un capteur de pression», il faut entendre que l'organe chargé de mesurer la pression assure uniquement cette fonction, à l'exception de tout autre fonction.

En attribuant ainsi un logement de la culasse, habituellement destiné aux bougies de préchauffage, à un simple capteur de pression, on évite l'utilisation de composants complexes.

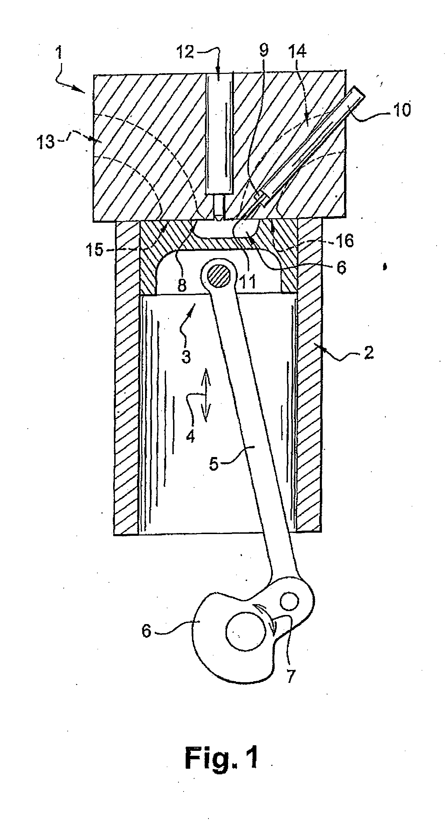

L'invention sera mieux comprise à la lecture de la description qui va suivre, faite seulement à titre d'exemple. Celle-ci est accompagnée de la figure 1 qui illustre selon un plan de coupe transversale un exemple de moteur selon l'invention, le piston représenté étant au point mort haut.

Comme illustré à la figure 1 l'invention concerne une culasse 1 de moteur, notamment de moteur diesel.

Ledit moteur comprend en outre, par exemple, au moins un cylindre 2 et au moins un piston 3, prévu mobile dans ledit cylindre 2, par exemple selon un mouvement de translation selon la flèche repérée 4. Il comprend également, notamment, au moins une bielle 5, assujettie selon une liaison pivot, d'une part audit piston et, d'autre part, à un vilebrequin 6.

A chaque cylindre est associé une chambre de combustion 6 dudit moteur et lesdits pistons 3 sont aptes à faire varier le volume desdites chambres de combustion 6. Ils permettent de la sorte la compression d'un mélange de carburant et de comburant préalablement admis dans lesdites chambres 6.

Cette compression provoque alors une auto combustion assurant le mouvement des pistons 3. Lesdits pistons 3 entraînent ainsi les bielles 5 et lesdites bielles entraîne à leur tour le vilebrequin 6, par exemple selon un mouvement de rotation, comme illustré par la flèche repérée 7.

Ledit moteur pourra comprendre quatre dites chambres de combustion et fonctionner selon le cycle classique, dit à quatre temps.

Cela étant, la culasse 1 conforme à l'invention comprend un corps, notamment monobloc, présentant une zone plane 8, dite tête de cylindre, apte à fermer la ou lesdites chambres de combustion. Une telle zone plane permet de disposer d'un volume de chambre de combustion qui soit minimum lorsque le piston 3 est au point mort haut, c'est-à-dire, lorsque le piston 3 est au plus prêt de la culasse 1.

Ledit volume est défini, par exemple, dans l'épaisseur de matière dudit piston 3.

Ledit corps de culasse 1 présente en outre un logement 9 débouchant au niveau de ladite tête de cylindre 8 pour communiquer avec ladite chambre de combustion 6, et ladite culasse comprend en outre un organe 10 permettant de mesurer la pression dans la chambre de combustion.

Selon l'invention, ledit organe est constitué d'un capteur de pression et ledit logement 9 accueille exclusivement ledit capteur 10.

Comme évoqué plus haut, ledit logement présente des dimensions qui lui permettraient, par exemple, d'accueillir une bougie de préchauffage. Autrement dit, le capteur de pression est prévu en lieu et place de la bougie.

Ledit capteur présente, par exemple, une extrémité 11, dite distale, destinée à être orientée vers la chambre de combustion, ladite extrémité distale 11 étant prévue sensible à la pression. De tels capteurs de pression sont, en eux-mêmes, connus de l'homme du métier.

Selon un premier mode de réalisation, correspondant à celui illustré, ladite extrémité distale est prévue affleurante au niveau de ladite tête de cylindre 8.

Selon un autre mode de réalisation, ladite extrémité distale du capteur se trouve légèrement en retrait à l'intérieur dudit logement.

Dans chacun de ces cas, on évite, grâce au positionnement du capteur, que celui-ci débouche dans la chambre de combustion 6 alors qu'avec l'organe de l'état de la technique, celui-ci devant assurer également une fonction de bougie de préchauffage, son extrémité distale débouche nécessairement dans la chambre ce qui détériore l'aérodynamique de la chambre.

Ladite culasse comprend en outre de façon classique, par exemple, un logement 12 pour un injecteur, non représenté, et/ou des conduits 13,14, illustrés en pointillé à la figure 1 car se trouvant en arrière du plan de coupe, pour l'admission de l'air et/ou l'échappement des gaz brûlés. Elle comprend aussi, notamment, des soupapes d'ouverture/fermeture desdits conduits, non représentées.

Selon un mode de réalisation particulier, ladite tête de cylindre présente, par exemple, une section sensiblement circulaire et ladite culasse définit quatre dits conduits pour l'admission de l'air et l'échappement des gaz brûlés. Lesdits conduits débouchent au niveau d'orifices situés sensiblement au sommet d'un carré centré sur le centre de ladite tête de cylindre. Le logement 12 pour l'injecteur débouche au centre de ladite tête de cylindre 8 et ledit logement 9 pour le capteur de pression débouche au niveau ladite tête de cylindre 8 entre deux des orifices des quatre dits conduits.

Le dispositif de démarrage de moteur comprend à cette fin, par exemple, des moyens, non représentés, pour échauffer les gaz présents dans la ou les chambres de combustion du moteur de façon à les porter à une température minimum, notamment d'environ 415°C, dans l'ensemble du volume des chambres lorsque les pistons du moteur sont en position de compression maximum ou au voisinage de celle-ci.

On peut ainsi assurer le démarrage du moteur sans bougies de préchauffage, même par temps froid.

Selon un premier mode de réalisation, lesdits moyens de préchauffage sont constitués par une machine électrique propre à entraîner le vilebrequin du moteur à une vitesse de rotation choisie, supérieure à une vitesse de rotation normale obtenue avec ladite machine électrique, de façon à augmenter la quantité d'air admise dans les cylindres du moteur et, par conséquent, la température dans les cylindres.

L'invention envisage tout particulièrement d'utiliser un démarreur électrique classique, c'est-à-dire un démarreur apte à fonctionner sous une tension électrique donnée, par exemple de 12 volts.

On prévoit alors de relier le démarreur électrique à un circuit électrique apte à alimenter le démarreur à partir d'une tension électrique survoltée, c'est-à-dire supérieure à la tension électrique donnée constituant la tension habituelle de fonctionnement du démarreur.

Dans un mode de réalisation différent, le dispositif de démarrage comprend en outre ou alternativement des moyens de préchauffage aptes à préchauffer l'air d'admission et donc les gaz destinés à la combustion, lesdits moyens de préchauffage étant prévus dans le système d'admission du moteur au niveau d'un conduit alimentant simultanément l'ensemble des chambres de combustion.

Selon ce mode de réalisation, les moyens de préchauffage comprennent, par exemple, au moins une résistance électrique (R) qui pourra être intégrée dans une vanne de réglage du débit des gaz destinée à participer à la combustion, ladite vanne étant prévue au niveau dudit conduit.

## Revendications

1. Ensemble d'un moteur, notamment moteur diesel, et d'un dispositif de démarrage de moteur, ledit moteur étant équipé d'une culasse (1), comprenant un corps (1) présentant au moins une zone sensiblement plane (8), dite tête de cylindre, apte à fermer au moins une chambre de combustion (6) dudit moteur, et un logement (9) débouchant au niveau de ladite tête de cylindre (8) pour communiquer avec ladite chambre de combustion (6), ladite culasse présentant en outre un organe (10) permettant de mesurer la pression dans la chambre de combustion (6),
- ledit dispositif de démarrage étant apte à permettre un démarrage dudit moteur sans bougie de préchauffage de la chambre de combustion,
**caractérisée en ce que** :
- ledit organe (10) est constitué d'un capteur de pression, ledit logement (9), prévu apte à accueillir une bougie de préchauffage, accueillant exclusivement ledit capteur.

2. Ensemble selon la revendication 1, dans laquelle ledit capteur (10) présente une extrémité (11), dite distale, destinée à être orientée vers la chambre de combustion (6), ladite extrémité distale (11) étant prévue sensible à la pression.

3. Ensemble selon la revendication 2 dans laquelle ladite extrémité distale (11) du capteur (10) affleure ladite tête de cylindre (8).

4. Ensemble selon la revendication 2 dans laquelle ladite extrémité distale (11) du capteur (10) se trouve légèrement en retrait à l'intérieur dudit logement.

5. Ensemble selon la revendication 1 dans lequel ledit moteur comprend au moins un cylindre (2) et au moins un piston (3), ledit piston (3), prévu mobile dans ledit cylindre (2), étant apte à faire varier le volume de ladite chambre de combustion (6) dudit moteur, et dans lequel ledit dispositif de démarrage comprend des moyens pour échauffer les gaz présents dans la ou les chambres de combustion (6) du moteur de façon à les porter à une température minimum dans l'ensemble du volume de la ou desdites chambres (6) lorsque lesdits pistons (3) du moteur sont en position de compression maximum ou au voisinage de celle-ci.

## Patentansprüche

1. Anordnung aus einem Motor, insbesondere einem Dieselmotor, und einer Motorstartvorrichtung, wobei der Motor mit einem Zylinderkopf (1) ausgestattet ist, der einen Körper (1) mit mindestens einer im Wesentlichen ebenen Zone (8), dem so genannten Zylinderdeckel, die mindestens eine Brennkammer (6) des Motors schließen kann, und einer Aufnahme (9), die in dem Zylinderdeckel (8) mündet, um mit der Brennkammer (6) in Verbindung zu stehen, aufweist, wobei der Zylinderkopf des Weiteren ein Glied (10) aufweist, das das Messen des Drucks in der Brennkammer (6) gestattet;
- wobei die Startvorrichtung ein Starten des Motors ohne Glühkerze zum Vorglühen der Brennkammer gestattet, **dadurch gekennzeichnet, dass**
- das Glied (10) aus einem Drucksensor besteht, wobei die zum Aufnehmen einer Glühkerze vorgesehene Aufnahme (9) ausschließlich den Sensor aufnimmt.

2. Anordnung nach Anspruch 1, wobei der Sensor (10) ein Ende (11), das so genannte distale Ende, aufweist, das zur Brennkammer (6) ausgerichtet ist, wobei das distale Ende (11) druckempfindlich vorgesehen ist.

3. Anordnung nach Anspruch 2, wobei das distale Ende (11) des Sensors (10) bündig mit dem Zylinderdeckel (8) ist.

4. Anordnung nach Anspruch 2, wobei das distale Ende (11) des Sensors (10) etwas in das Innere der Aufnahme zurückgesetzt ist.

5. Anordnung nach Anspruch 1, wobei der Motor mindestens einen Zylinder (2) und mindestens einen Kolben (3) aufweist, wobei der beweglich in dem Zylinder (2) vorgesehene Kolben (3) das Volumen der Brennkammer (6) des Motors ändern kann, und wobei die Startvorrichtung Mittel zum Erwärmen der in der oder den Brennkammer(n) (6) des Motors vorhandenen Gase aufweist, um sie auf eine Mindesttemperatur in dem ganzen Volumen der Kammer(n) (6) zu bringen, wenn sich die Kolben (3) des Motors in oder nahe der Position maximaler Verdichtung befinden.

## Claims

1. Assembly of an engine, notably a diesel engine, and of an engine starting device, the said engine being equipped with a cylinder head (1) comprising a body (1) having at least one substantially flat zone (8) referred to as the combustion chamber roof, able to close off at least one combustion chamber (6) of the said engine, and a housing (9) opening into the said combustion chamber roof (8) to communicate with the said combustion chamber (6), the said cylinder head also having a member (10) allowing the pressure in the combustion chamber (6) to be measured,
- the said starting device being able to allow the said engine to start without a glow plug preheating the combustion chamber,
**characterized in that**:
- the said member (10) consists of a pressure sensor, the said housing (9), designed to be able to accommodate a glow plug, exclusively accommodating the said sensor.

2. Assembly according to Claim 1, in which the said sensor (10) has an end (11) referred to as the distal end, intended to be oriented towards the combustion chamber (6), the said distal end (11) being intended to be pressure-sensitive.

3. Assembly according to Claim 2, in which the said distal end (11) of the sensor (10) lies flush with the said combustion chamber roof (8).

4. Assembly according to Claim 2, in which the said distal end (11) of the sensor (10) is set back slightly inside the said housing.

5. Assembly according to Claim 1, in which the said engine comprises at least one cylinder (2) and at least one piston (3), the said piston (3), designed to be able to move in the said cylinder (2), being able to vary the volume of the said combustion chamber (6) of the said engine, and in which assembly the said starting device comprises means for heating the gases present in the combustion chamber or chambers (6) of the engine in order to raise them to a minimum temperature throughout the volume of the said chamber or chambers (6) when the said pistons (3) of the engine are in or near the position of maximum compression.
